## Europäisches Patentamt
## European Patent Office
## Office européen des brevets

(11) Veröffentlichungsnummer: **0 443 369 A2**

# EUROPÄISCHE PATENTANMELDUNG

(21) Anmeldenummer: 91101637.6

(22) Anmeldetag: 07.02.91

(51) Int. Cl.5: **B65D 3/08**, B65D 3/28, B31C 1/04, B31B 1/86, B29C 57/00

(30) Priorität: 20.02.90 DE 4005257

(43) Veröffentlichungstag der Anmeldung: 28.08.91 Patentblatt 91/35

(84) Benannte Vertragsstaaten: AT BE CH DE DK ES FR GB GR IT LI LU NL SE

(71) Anmelder: **Tetra Pak Holdings & Finance S.A. 70, Avenue C.-F. Ramuz CH-1009 Pully(CH)**

(72) Erfinder: **Reil, Wilhelm Altengassweg 16 W-6140 Bensheim(DE)** Erfinder: **Deutschbein, Ulrich Am Handenberg 3**

**W-6109 Mühltal(DE)** Erfinder: **Knobloch, Gerd Sterngasse 82 W-6103 Griesheim(DE)** Erfinder: **Liebram, Udo Wilhelm-Leuschner-Strasse 4 W-6102 Pfungstadt(DE)** Erfinder: **Eckerwall, Bengt Chemin de Ponfilet 100 CH-1093 La Conversion, Lutry(CH)**

(74) Vertreter: **Weber, Dieter, Dr. et al Willrath Weber und Seiffert Postfach 6145 Gustav-Freytag-Strasse 25 W-6200 Wiesbaden 1(DE)**

(54) **Fliessmittelpackung mit Greifmulden und Verfahren zur Herstellung derselben.**

(57) Beschrieben wird eine Flüssigkeitspackung mit einem Tubus (1), an dessen Enden Boden und Dekkel (7) angebracht sind, wobei der Deckel (7) aus thermoplastischem Kunststoff besteht, am Tubus (1) angespritzt ist und eine Ausgießeinrichtung (8) aufweist. Der Boden ist viereckig und aus dem umgefalteten Tubus (1) der Packung als Faltverschluß ausgebildet. Ein mit dem Deckel (7) verbundener Griff (11) ist derart angebracht, daß der Griff (11, 17) zusammen mit dem Deckel (7) innerhalb der quaderförmigen Außenkontur der Packung angeordnet ist.

Um einen besseren Griff in einfacherer Gestaltung mit großer Stückzahl Packungen pro Zeiteinheit zu schaffen, wird erfindungsgemäß vorgesehen, daß der Tubus (1) aus einer Kunststoffolie gebildet ist, an die zwei einander gegenüberliegende, vom Deckel (7) ausgehend, bis in den Mittelbereich (18) der Packung reichende Greifmulden (11) eingeformt sind, und daß der Querschnitt der Packung in ihrem oberen Abschnitt mit den Greifmulden (11) im wesentlichen der Form des Deckels (7) entspricht, dessen Umfang im wesentlichen so lang ist wie der Umfang der Packung nahe ihrem Boden.

Fig. 1

Die Erfindung betrifft eine Packung für fließfähige Füllgüter mit einem durch mindestens eine Längssiegelnaht gebildeten Tubus, an dessen Enden Boden und Deckel angebracht sind, von denen der Deckel aus thermoplastischem Kunststoff ohne Trägermaterial besteht, an dem Tubus angespritzt ist und eine Ausgießeinrichtung aufweist und von denen der Boden viereckig ist und aus dem umgefalteten Tubus der Packung als Faltverschluß ausgebildet ist, wobei ein mit dem Deckel verbundener Griff seitlich am Tubus und unterhalb des Deckels derart angebracht ist, daß der Griff zusammen mit dem Deckel innerhalb der quaderförmigen Außenkontur der Packung angespritzt ist.

Bei Packungen bekannter Art besteht der Tubus aus beidseitig mit thermoplastischem Kunststoff beschichtetem Trägermaterial, z.B. Karton oder Papier. Dieser Papiertubus läßt sich bekanntlich nur falten, so daß ein Deckel, eine Ausgießeinrichtung in demselben, ein Griff und dergleichen Einrichtungen nicht durch einfaches Falten mit einfachen Herstellungsmaschinen erstellt werden können, so daß man diese Teile mit entsprechend gestalteten Spritzformen angespritzt hat. Dafür sind verhältnismäßig teure Werkzeuge erforderlich, und auch am Zuschnitt geht durch Doppelfaltung, Ausstanzungen oder dergleichen Papier verloren.

Außerdem hat sich bei solchen bekannten Packungen mit Papiertubus und aus thermoplastischem Material angespritztem Griff gezeigt, daß es im Verlaufe der Massenherstellung solcher Produkte erforderlich war, kurze Fließwege für das flüssige Thermoplastmaterial vorzusehen mit der Folge, daß der damit angespritzte Griff zum Schwerpunkt der Packung ungünstig liegt. Insbesondere bei größeren Packungen mit einem Volumen von 1 Liter, 2 Liter und dergleichen hat man festgestellt, daß ein Griff mit kurzen Fließwegen in der Herstellungsmaschine vom Schwerpunkt zuweit ab nach oben in der Nähe des Deckels liegt. Dadurch wird das Ausgießen für den Endverbraucher erschwert, weil dieser mit dem zuweit oben am Deckel angeformten Griff den unteren Abschnitt der Packung nur schlecht zum Ausgießen hochziehen kann, insbesondere wenn sich die Packung allmählich leert. Außerdem wird beim Ausgießen die Beanspruchung auf den Griff dieser bekannten Packung hoch, so daß die doch recht kleinen Verbindungsbereiche zwischen Griff und Papiertubus sehr beansprucht werden und mitunter abreißen.

Aufgabe der vorliegenden Erfindung ist es daher, eine Packung der eingangs genannten Art und ein Verfahren zur Herstellung derselben zu entwickeln, um einen besseren Griff in möglichst einfacherer Gestaltung mit großer Stückzahl pro Zeiteinheit zu schaffen.

Diese Aufgabe wird erfindungsgemäß dadurch gelöst, daß der Tubus aus einer Kunststoffolie gebildet ist, in die zwei einander gegenüberliegende, vom Deckel ausgehend, bis in den Mittelbereich der Packung reichende Greifmulden eingeformt sind, und daß der Querschnitt der Packung in ihrem oberen Abschnitt mit den Greifmulden im wesentlichen der Form des Deckels entspricht, dessen Umfang im wesentlichen solang ist wie der Umfang der Packung nahe ihrem Boden. Zwar wird erfindungsgemäß ein Tubus wie bei der bekannten Packung gebildet, und es wird auch ein Deckel aus Kunststoff ohne Trägermaterial wie bei der bekannten Packung an den oberen Rand des Tubus angespritzt. Als Material für den Tubus wird erfindungsgemäß aber eine Kunststoffolie verwendet, welche das Einformen von Greifmulden mit einfachen Werkzeugen und damit die Schaffung eines besser gelegenen und höher zu beanspruchenden Griffes erlaubt. Der Endverbraucher kann nämlich wie bei anderen bekannten Kunststoffpackungen die Fingerspitzen in die Greifmulden legen und die sich - von der Ausgießeinrichtung abgewandten Seite - zwischen den Fingern befindliche Stützsäule ergreifen, um die Packung zu haltern und beim Ausgießen zu kippen. Das Volumen der Packung wird durch Greifmulden nur unwesentlich verkleinert. Bei der eingangs erwähnten Packung befand sich der angespritzte Griff in einem tetraederförmigen Raum innerhalb der gesamten Außenkontur der Packung, wobei ein Teil dieses tetraederförmigen Volumens für das Greifen nicht einmal unbedingt erforderlich war, gleichwohl dem Füllvolumen verlorengeht.

Der Querschnitt der Packung entspricht in ihrem oberen Abschnitt mit den Greifmulden, insbesondere an den oberen Enden der Greifmulden, in etwa der Gestaltung des Deckels. Hierdurch ist es möglich, die oberen, deckelseitigen Kanten des Tubus entlang des Deckelrandes zu führen und dort zu fixieren. Bei den bekannten Packungen mit am Papiertubus angespritzten Deckeln wird ebenfalls der deckelseitige obere Rand oder die Tubuskante vom Deckel gestützt und gehaltert. Erfindungsgemäß wird die gleiche Stützkraft des Deckels dazu verwendet, die Gestaltung der deckelseitigen oberen Enden der Greifmulden zu fixieren, ohne daß besondere Bearbeitungen dieser oberen Enden der Greifmulden erforderlich wären. Dadurch ergibt sich der besondere Vorteil, daß die erfindungsgemäße Packung mit herkömmlichen Maschinen hergestellt werden kann oder mindestens mit nur geringfügigen Umbauten an diesen Maschinen. Der Fachmann weiß, daß Packungshersteller sehr teure Maschinen verwenden und daß es einen großen Vorteil bedeutet, wenn man bessere Packungen mit den alten Maschinen herstellen kann. Zwar könnte man eine Kunststoffolie thermoplastisch bearbeiten, der Fachmann weiß aber, daß diese Verformung, z.B. ein Tiefziehen, einen zusätzlichen Herstellungsschritt und entsprechende Werkzeuge bedeutet, die alle entfallen können, wenn am deckelseitigen oberen Ende des Tubus die Greifmulden nur durch Falten entstehen und in ihrer gefalteten labilen Form durch Anspritzen an den entsprechend gestalteten Deckel fixiert und in ihrer Form stabilisiert werden. Für diesen Vorteil und die vorstehend beschriebene Ausgestaltung der neuen Packung mit den Greifmulden ist es daher auch erforderlich, daß der Umfang des Dekkels im wesentlichen so lang ist wie der Umfang der Packung nahe ihrem Boden. Mit anderen Worten ist der Außenumfang des Bodens von demselben Tubus geformt wie der Außenumfang des oberen Tubusendes im Bereich der oberen Enden der Greifmulden, so daß ohne plastische Verformung des Tubus am Boden und am Deckel der Umfang des Tubus gleich lang ist und bei der Packung entsprechend auch gleich lang vorgesehen sein muß.

Bei vorteilhafter weiterer Ausgestaltung der Erfindung ist die Greifmulde teilzylindermantelförmig ausgebildet und zwischen dem vorderen Packungskörper unter der Ausgießeinrichtung einerseits und einer hinteren Stützsäule andererseits angeordnet. Zwar könnte man Greifmulden mit einem V-förmigen Querschnitt gestalten, so daß die beiden Schenkel des V (im Querschnitt der Greifmulde) sich längs einer geraden Linie treffen. Eine solche Greifmulde wäre aber nicht besonders angenehm für den Endverbraucher, weshalb die Form eines Teilzylinders bevorzugt wird. Dieser Teilzylinder als Greifmulde befindet sich als Vertiefung oder Eindrückung auf zwei gegenüberliegenden Seiten bezüglich einer dazwischen zu denkenden vertikalen Ebene, welche durch die Längsmittelachse der Packung einerseits, nach vorn hin durch die Mitte der Ausgießeinrichtung andererseits und nach hinten durch die erwähnte Stützsäule drittens hindurchlaufend zu denken ist. Die sogenannte hintere Stützsäule bildet sich durch die oberen äußeren Seitenwände im oberen Abschnitt der Packung gegenüber der Ausgießeinrichtung und wird nach vorn zur Ausgießeinrichtung hin durch die beiden Greifmulden begrenzt. Der Endverbraucher legt die vorderen Fingerenden in die Greifmulden und erfaßt damit die Stützsäule im Inneren der Hand. Mit Vorteil kann kurz vor dem Öffnen einer solchen Packung das Volumen des darin befindlichen Füllgutes sogar bis in den oberen Bereich der Stützsäule reichen. Damit liegt mittels der Greifmulden der erfindungsgemäße Handgriff zum Schwerpunkt der Packung sehr günstig. Das untere Ende der Greifmulden könnte bis in den mittleren Bereich der Packung oder noch tiefer reichen, denn das hohe Ansetzen des bekannten angespritzten Griffes an der eingangs erwähnten Packung für die kurzen Spritzwege des thermoplastischen Materials braucht erfindungsgemäß nicht beachtet zu werden. Ein durch die erfindungsgemäßen Greifmulden gebildeter Handgriff kann auch wesentlich stärker beansprucht werden, und es gibt keine punktartigen, linienartigen oder kleinflächigen Verbindungen zwischen Griff und Tubus, die abreißen könnten. Damit ist der erfindungsgemäße Griff wesentlich verbessert.

Vorteilhaft ist es gemäß der Erfindung weiterhin, wenn der Deckel im wesentlichen viereckig ist, die Ausgießeinrichtung in einer vorderen Ecke angebracht ist und die Stützsäule sich im wesentlichen unter der hinteren Ecke des Deckels befindet. Fließmittelpackungen können verschiedenste Gestalt haben, im wesentlichen werden bei bevorzugten Ausführungsformen hier quaderförmige Packungen betrachtet. Die Ausgießeinrichtung wird im allgemeinen in der Nähe einer Deckelkante angeordnet, um ein komfortables Ausgießen zu gewährleisten. Es gibt Packungen, bei denen die Ausgießeinrichtung zwischen zwei Ecken oder abgerundeten Ecken eines Deckels liegt. Bei der hier beschriebenen und besonders bevorzugten Ausführungsform ist in an sich bekannter Weise die Ausgießeinrichtung in einer vorderen Ecke des Deckels angebracht. Daraus ergibt sich dann gemäß dem vorstehend erwähnten Merkmal erfindungsgemäß, daß sich die Stützsäule im wesentlichen unter der hinteren Ecke des Deckels befindet. Auch hierdurch wird die günstige Lage des Greifpunktes des Endverbrauchers beim Ausgießen bezüglich des Schwerpunktes der ganz oder teilweise gefüllten Packung begünstigt.

Besonders ansprechend wird das Äußere der Packung, wenn erfindungsgemäß die Ecken des Deckels abgerundet sind. Für die Greifmulden ist die Gestalt eines nach außen offenen Teilzylindermantels vorgesehen, der sich teilweise bei bevorzugten Ausführungsformen vom Deckel oben nach unten zum Mittelbereich hin verjüngend ausgestaltet sein kann. Jedenfalls hat der Endverbraucher bei der Handhabung der Packung mittels der Greifmulden das Gefühl, daß diese tunnelartige Bögen vorgeben, und das gesamte Äußere der Packung wird noch ansprechender, wenn auch die anderen Teile des oberen Abschnittes der Packung entsprechend teilzylindermantelförmig ausgestaltet sind, nämlich durch Abrundung der Kanten des im Querschnitt allgemeinen viereckigen Tubus der Packung.

Eine solche Packung kann durch gleiche Maschinen hergestellt werden, nur daß anstelle einer Papierbahn für die erfindungsgemäße Packung eine Kunststoffolie in Bahnform oder in Bogenform eingesetzt wird. Der neue Handgriff ist so geformt, daß er innerhalb der gesamten Außenkontur der Packung bleibt. Eine thermoplastische Verformung kann sich auf Punkte oder kurze Linien im Mittelbereich der Packung beschränken, vorzugsweise an den unteren, dem Deckel abgewandten Enden der Greifmulden.

Obwohl die Greifeinrichtung durch die erfindungsgemäßen Greifmulden sehr verbraucherfreundlich ist, kann man den Komfort der Handhabung noch weiter dadurch verbessern, daß erfindungsgemäß am oberen Ende wenigstens einer Greifmulde ein Randanschlag einstückig am Rand des Deckels angespritzt ist. Dieser bedeutet für die greifenden und sich in der Greifmulde befindlichen Finger einen Anschlag nach oben, denn durch das Gewicht der Packung könnte bei schwachem Greifdruck die Packung relativ zur Hand nach unten rutschen bzw. die Finger zum oberen Ende der Greifmulden hinrutschen. Wenn sich an einem oder gar an beiden Greifmulden ein solcher Randanschlag befindet, können die Finger die Packung formschlüssig haltern, und mit Vorteil braucht der Greifdruck nicht mehr so groß zu sein, weil die Haltekraft nicht nur durch Reibung mittels Greifdruck erzeugt werden muß.

Das Verfahren zur Herstellung der eingangs beschriebenen Packung ist dadurch gekennzeichnet, daß aus einer Kunststoffolie mittels Verschweißen einer Längsnaht ein Tubus geformt und dieser auf einen Dorn mit muldenartigen Vertiefungen gezogen wird, danach die Seitenwände des Tubus in seinem oberen Abschnitt in die Vertiefungen unter Bildung von Greifmulden eingefaltet werden, der Deckel an den oberen Rand der Seitenwände angespritzt und gleichzeitig wenigstens die unteren Enden der Greifmulden im Mittelbereich der Packung erwärmt, thermoplastisch verformt und danach gekühlt werden. Bei der bisher bekannten Packung mit dem angespritzten Griff wurde zwar auch aus dem beschichteten Papier mittels Verschweißen einer Längsnaht ein Tubus geformt und dieser auf einen Dorn gezogen, damit der Deckel an den oberen Rand der Seitenwände angespritzt werden konnte. Gleichzeitig wurde aber der Griff angespritzt und ergab das eingangs beschriebene Produkt mit gewissen Nachteilen. Unter Verbesserung der Greifeinrichtung werden mit dem erfindungsgemäßen Verfahren die Nachteile vermieden. Das Verfahren zeichnet sich durch besondere Einfachheit aus. Zur Durchführung dieses Verfahrens können bekannte Packungsherstellungsmaschinen verwendet werden, die überwiegend nicht und sonst nur an wenigen Stellen kleinere Umbauten erfahren müssen. Die Einbringung von muldenartigen Vertiefungen in einen Dorn ist eine einmalige und leicht zu bewerkstelligende Sache. Das Aufziehen eines Tubus auf einen solchen Dorn, dessen muldenartige Vertiefungen möglichst in Richtung des Aufziehens verlaufen, d.h. in Längsrichtung der späteren Packung und in Längsrichtung des Tubus (auch Längsrichtung des Dornes), ist einfach. Der Außenumfang des Dornes bleibt über die gesamt Höhe des Tubus im wesentlichen gleich lang, auch im Bereich der muldenartigen Vertiefungen. Diese sind so in den Dorn eingeformt, daß der Kunststofftubus faltenfrei auf die Oberfläche des Dornes aufgelegt werden kann, sofern sich die Innenflächen des Tubus auf die Außenflächen des entsprechend gestalteten Dornes auflegen. Auf diese Weise erfolgt das problemlose Einfalten der Seitenwände des Tubus im oberen Bereich desselben, wodurch von selbst die Greifmulden - nämlich im Bereich der muldenartigen Vertiefungen des Dornes - gebildet werden. Auf dem Dorn mit entsprechenden Außenbacken ist nun wie bei den früheren Maschinen der Tubus fest gehaltert, und es wird ein Deckel an den oberen Rand der Seitenwände angespritzt.

Gleichzeitig mit dem Anspritzen des Deckels an den oberen Rand der Seitenwände bzw. die Tubuskante werden kleine Flächen der Tubusseitenwände im Mittelbereich der Packung erwärmt, thermoplastisch verformt und danach zur Fixierung der Form gekühlt. Es genügt bei einer ersten Ausführungsform, wenn die unteren Enden der Greifmulden, die sich ja im Mittelbereich der Packung befinden, auf diese Weise verformt werden. Bei einem zweiten anderen Ausführungsbeispiel können sowohl die unteren Enden der Greifmulden als auch benachbarte Bereiche in der Mittelzone der Packung verformt und fixiert werden. In jedem Falle geht es um die einfache Ausgestaltung der Greifmulden mit einfachen Werkzeugen und ohne großen Zeitaufwand. Bildet man die Greifmulde länglich aus, wobei ihre Längsrichtung etwa parallel zur Längsrichtung der Packung verläuft, dann genügt es für die Fixierung der gewünschten Endgestalt einer solchen Greifmulde, wenn man die beiden Enden fixiert. Das deckelseitige obere Ende der Greifmulden wird durch das Anspritzen am Deckel fixiert. Das gegenüberliegende untere oder innere Ende der Greifmulden im Mittelbereich der Packung wird durch die thermoplastische Verformung und Kühlung fixiert. Weil der Deckel ohnehin an den Tubus angespritzt werden muß, bedeutet die einzige zusätzliche Bearbeitung des Tubus, um einen Griff mit entsprechend technischen Vorzügen vorzusehen, eine thermoplastische Verformung des Tubusmaterials in einem flächig eng begrenzten Bereich vorzunehmen. Der Fachmann sieht diese engen flächig begrenzten Bereiche wie eine Art Punkte an, denn beim Einbringen von Wärme an einen Punkt überträgt sich selbstverständlich die Wärme auch auf Bereiche um den Punkt herum. Durch Erwärmung eines punktartigen Bereiches kann man einen tiefziehfähigen Kunststoff also an dieser Stelle tiefziehen. Genau das ist die Technik, die erfindungsgemäß auf überraschend einfache Weise die Fixierung der Greifmulden gestattet.

Während des Anspritzens des Deckels und des thermoplastischen Verformens dieser kleinflächigen Punkte bleibt das übrige Folienmaterial des tiefziehfähigen Kunststoffes kalt. Dadurch wird auch sehr wenig Energie verbraucht. Das thermoplastische Verformen erfolgt in an sich bekannter Weise durch Drücken oder Strecken in eine vorgegebene Form hinein, welche genau der gewünschten Endform der unteren Enden der Greifmulden entspricht.

Nicht nur das Spritzen wird gegenüber der bekannten Packung und entsprechender Herstellungsverfahren einfacher, auch die Werkzeuge, die Herstellung dieser Werkzeuge und die Durchführung des Spritzvorganges werden einfacher. Gleichwohl kann man als Produkt eine Packung mit einer Greifeinrichtung versehen, bei deren Handhabung die Stabilität erheblich verbessert ist.

Wie bei den bekannten Packungen kann auch die Packung gemäß der Erfindung nach der vorstehend beschriebenen Bearbeitung von unten durch den späteren Bodenbereich hindurch gefüllt und dann durch Falten dieses Bodens verschlossen werden. Im Bodenbereich gibt es erfindungsgemäß keine thermoplastische Verformung mehr. Vielmehr wird die Kunststoffolie im Bodenbereich wie das beschichtete Papier bei den bekannten Herstellungsverfahren gehandhabt. Die Kunststoffbahn kann im Bodenbereich der späteren Packung vorgerillt sein, um die spätere Faltung zur Ausgestaltung des Bodens zu begünstigen. Damit kann der Packungshersteller ersichtlich wieder bekannte und vorhandene Maschinen benutzen.

Zweckmäßig ist es dabei erfindungsgemäß, wenn der Mittelbereich zweier nebeneinanderliegender Seitenwände des Tubus, einschließlich der dort befindlichen unteren Enden der Greifmulden erwärmt, thermoplastisch verformt und damit gekühlt werden. Wenn beispielsweise eine Packung in einer solchen Ausführungsform gestaltet werden soll, bei welcher etwa die untere Hälfte ein größeres Volumen als die obere Hälfte der Packung mit der Greifeinrichtung einnehmen soll, dann ergibt sich zwangsläufig eine Art Stufe wenigstens im Bereich zweier nebeneinanderliegender Seitenwände des Tubus. In diesem Stufenbereich ordnet man vorteilhafterweise die erwähnten unteren Enden der Greifmulden an und kann dann mit einfachen Werkzeugen wiederum nur einen kleinen Teil dieser zwei nebeneinanderliegenden Seitenwände thermoplastisch verformen, nämlich nur den Bereich der Stufe für den Übergang eines großen Volumens auf ein kleineres Volumen, wobei die Länge des Umfanges für beide Bereiche wieder gleich sein muß.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:

Figur 1    perspektivisch eine erste Ausführungsform der Packung von oben,

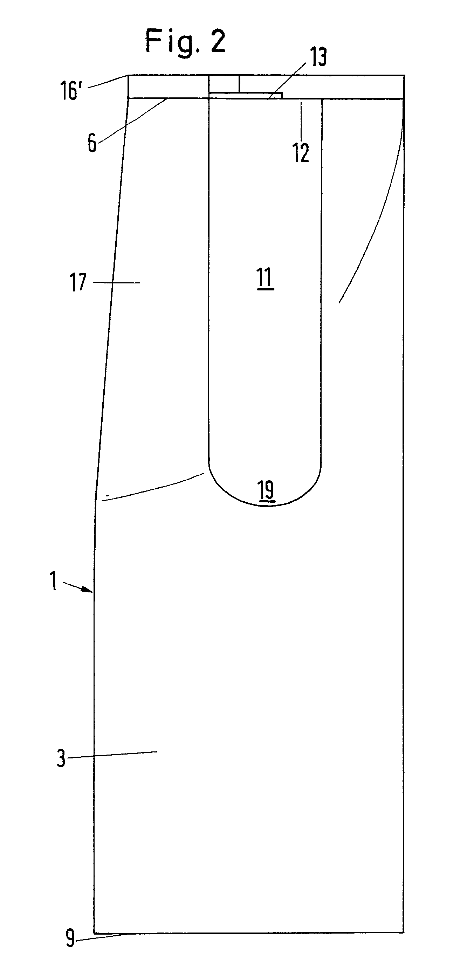

Figur 2    eine Seitenansicht der Packung, wenn man auf die vordere linke Fläche der Figur 1 blickt,

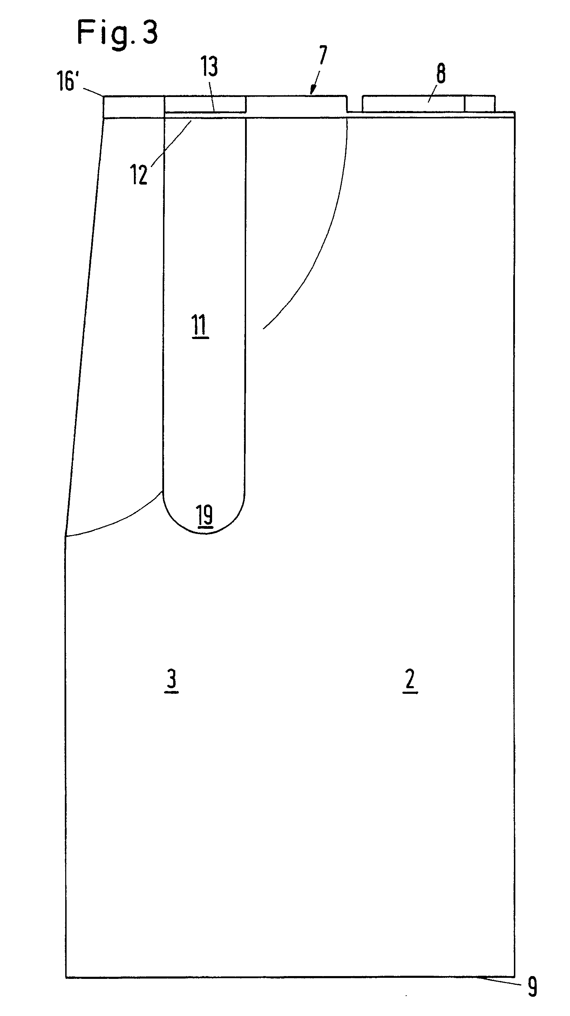

Figur 3    eine Seitenansicht der Packung, wenn man in Richtung der Diagonalen blickt, die bei der Betrachtung der Figur 1 in Blickrichtung liegt,

Figur 4    eine Draufsicht auf die Packung der ersten Ausführungsform,

Figur 5    die perspektivische Ansicht einer zweiten Ausführungsform der Packung von schräg oben und hinten,

Figur 6    eine Seitenansicht dieser Packung, wenn man auf die linke vordere Fläche gemäß Figur 5 blickt,

Figur 7    eine Draufsicht auf die Packung der zweiten Ausführungsform nach den Figuren 5 und 6,

Figur 8    die perspektivische Ansicht einer dritten Ausführungsform in ähnlicher Blickrichtung wie Figur 1,

Figur 9    eine Seitenansicht auf die Packung der Figur 1, wenn man auf die linke Fläche gemäß Figur 8 blickt,

Figur 10    eine Seitenansicht der Packung, wenn man in Richtung der Diagonalen blickt, die gemäß Figur 8 in Blickrichtung liegt, und

Figur 11    eine Draufsicht auf die Packung der Figur 8, wobei jedoch die Ausgießeinrichtung oben links angeordnet ist.

Alle drei Ausführungsformen der hier gezeigten Packungen sind für Flüssigkeiten geeignet und weisen einen durch Verschweißen einer nicht gezeigten Längssiegelnaht gebildeten Tubus 1 mit Seitenwänden 2 bis 5 auf. Die jeweils obere Kante 6 des Tubus 1 ist am Deckel 7 mit Ausgießeinrichtung 8 angespritzt. Der Boden 9 ist im Querschnitt bzw. in Ansicht der Packung von unten viereckig und ist in nicht dargestellter Weise als Faltverschluß ausgebildet.

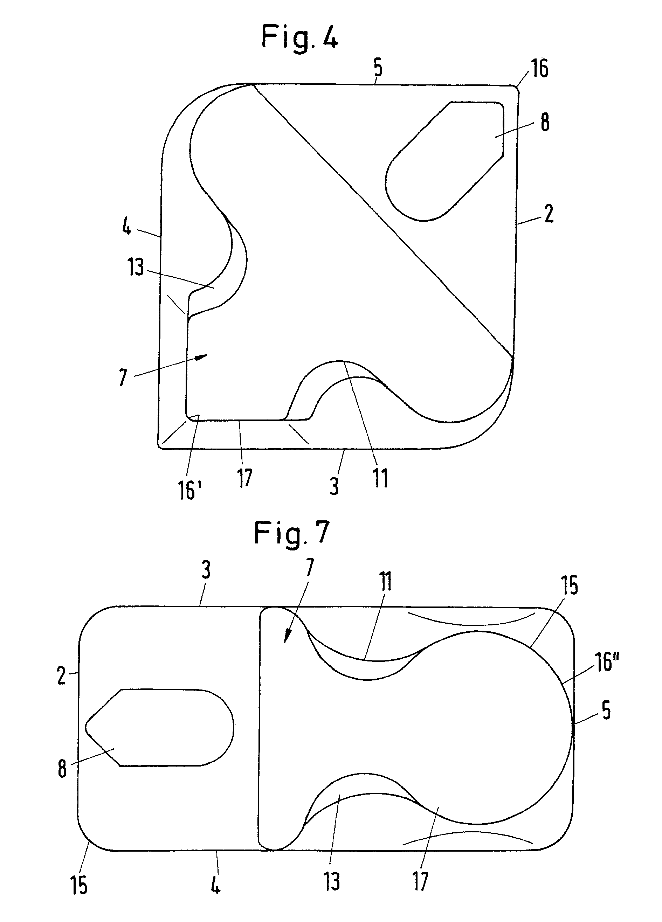

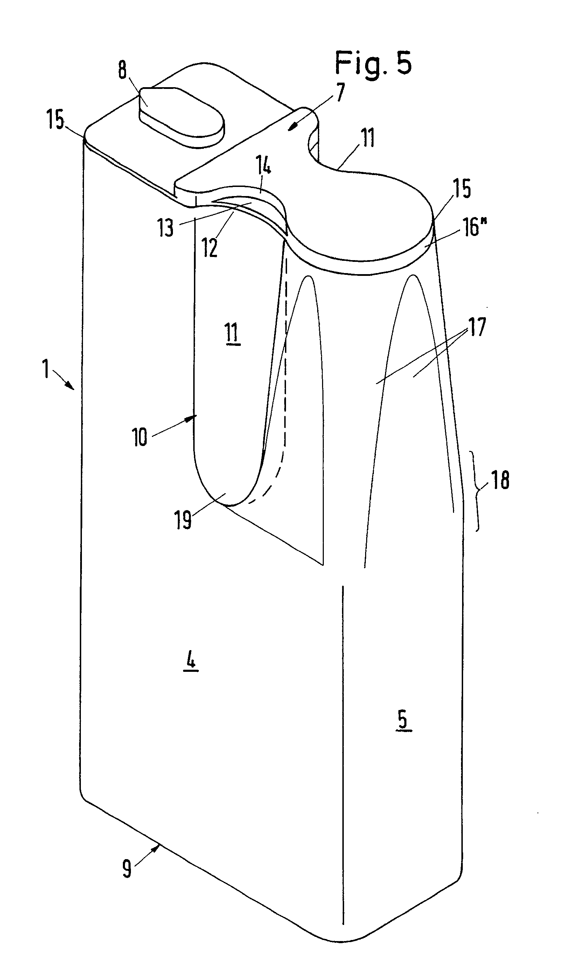

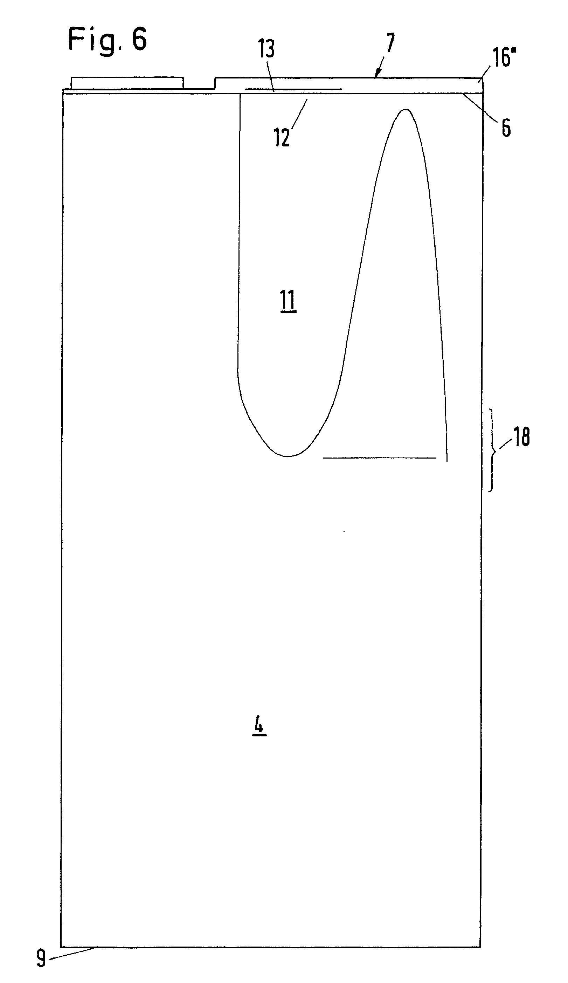

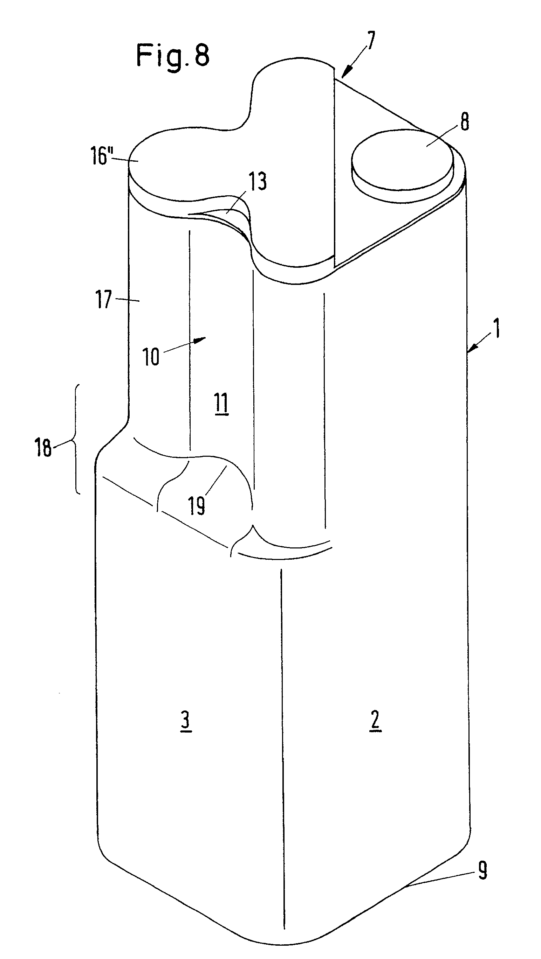

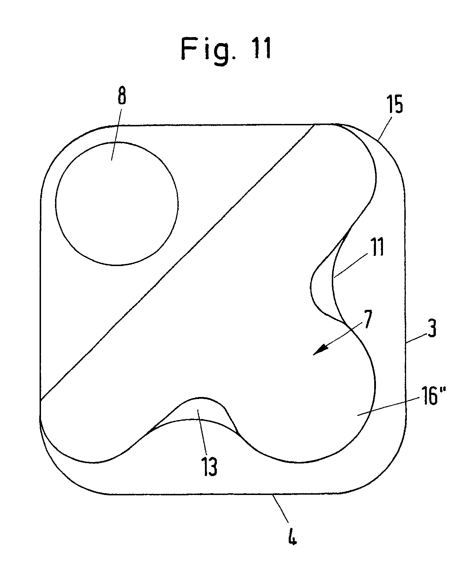

Der allgemein mit 10 bezeichnete Griff ragt mit keinem Teil über die quaderförmige Außenkontur der Packung hinaus und besteht aus zwei einander gegenüberliegenden Greifmulden 11, die mit ihren oberen Enden 12 an einstückig am Rand des Dekkels 7 angespritzte Randanschläge 13 angrenzen. Sie ragen aus der bogenförmigen Vertiefung 14 des Deckels 7 mondsichelartig in Richtung der Deckelebene nach außen radial heraus, ohne damit über die gesamte Außenkontur der Packung überzustehen und diese vorzugsweise auch nur zu erreichen. Man erkennt aus den Draufsichten der drei Ausführungsformen nach den Figuren 4, 7 und 11, daß die Ecken 15 des jeweiligen Deckels 7 überwiegend abgerundet sind. Lediglich bei der Ausführungsform der Figur 4 ist vorn neben der Ausgießeinrichtung 8 eine Spitze 16 und diagonal gegenüberliegend die hintere Spitze 16' angeordnet. Bei der Ausführungsform der Figur 7 ist der Deckel 7 im hinteren Bereich sogar teilkreisförmig rund ausgebildet, so daß man von einer abgerundeten Ecke 15 schon fast nicht sprechen kann. Innerhalb dieser Rundung befindet sich die Stützsäule 17, die sich im wesentlichen unter der hinteren Ecke 16' bzw. 16" befindet. Bei der Ausführungsform der Figuren 5 bis 7 ist diese "hintere Ecke" 16" zu einer vollständigen Rundung entartet, die zwischen zwei entsprechend entarteten Ecken 15 des Deckels 7 angeordnet ist.

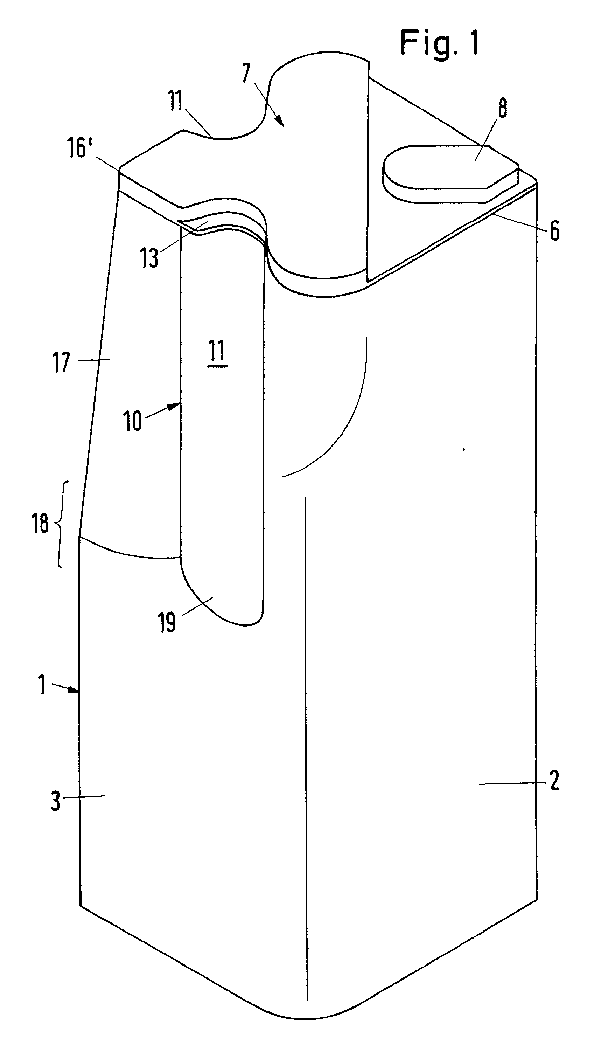

Während das obere Ende 12 der Greifmulden 11 vorstehend beschrieben und lokalisiert ist, betrachten wir nun den Mittelbereich 18 der Packung, welcher in den Figuren durch die geschweifte Klammer veranschaulicht ist. Außer bei der zweiten Ausführungsform nach den Figuren 5 bis 7, wo die hintere Seitenwand 5 im wesentlichen senkrecht zum Deckel 7 vertikal hochstehend gezeichnet ist (wenn man den Deckel 7 horizontal liegend ansieht), ergibt sich bei den anderen beiden Ausführungsformen im Mittelbereich 18 der Packung ein Abknicken dieser hinteren Seitenwand 5 bzw. bei der Ausführungsform der Figur 1 ein Verjüngen beider Seitenwände 3 und 4 nach oben zum Deckel hin. Vergleicht man den Umfang des Bodens (die Summe der vier geraden Linien) mit einem entsprechenden Umfang im oberen Abschnitt der Packung der jeweiligen Ausführungsform, dann versteht der Betrachter die Verjüngung, denn durch das Einformen der Greifmulden 11 ist ein Stück Umfangslänge verbraucht, so daß ein gleicher Umfang im oberen wie im unteren Abschnitt der jeweiligen Packung nur erreicht werden kann, wenn bei diesen beiden Ausführungsformen nach den Figuren 1 und 8 die hintere Ecke 16' bzw. 16" nach innerhalb der Außenkontur eingerückt wird.

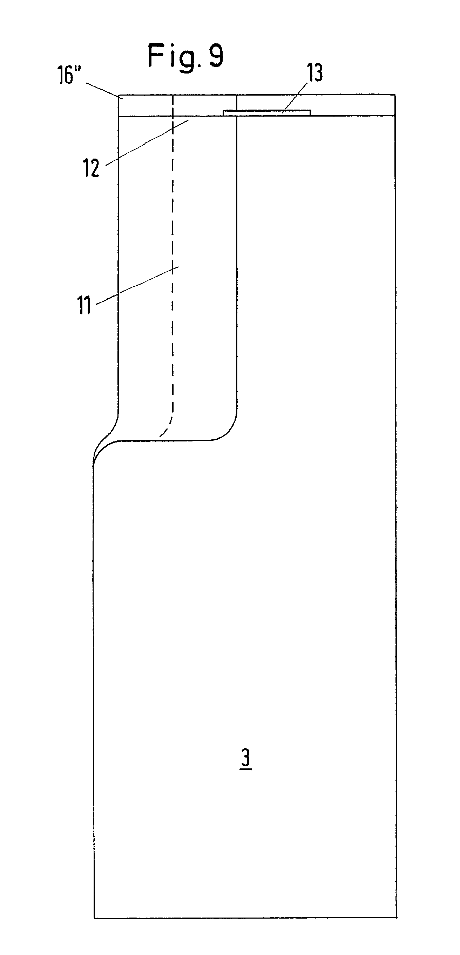

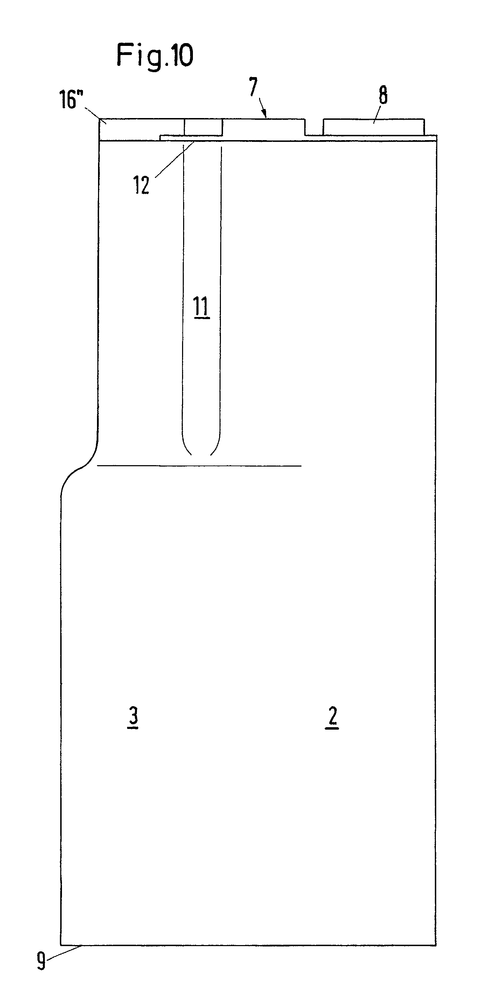

In diesem Mittelbereich 18 der Packung befinden sich die unteren Enden 19 der Greifmulden 11. Diese sind durch thermoplastisches Verformen ausgestaltet. Bei der Ausführungsform der Figuren 8 bis 11 sind sogar die Bereiche neben diesen unteren Enden 12 zu einer Stufe verformt, die sich in den Seitenwänden 3 und 4 befinden.

Bezugszeichenlsite

| | |
|---|---|
| 1 | Tubus |
| 2 | Seitenwand |
| 3 | Seitenwand |
| 4 | Seitenwand |
| 5 | Seitenwand |
| 6 | Kante |
| 7 | Deckel |
| 8 | Ausgießeinrichtung |
| 9 | Boden |
| 10 | Griff |
| 11 | Greifmulden |
| 12 | Enden |
| 13 | Randanschläge |
| 14 | Vertiefung |
| 15 | Ecken |
| 16 | Spitze |
| 16', 16" | hintere Ecken |
| 17 | Stützsäule |
| 18 | Mittelbereich |
| 19 | untere Enden |

**Patentansprüche**

1. Packung für fließfähige Füllgüter mit einem durch mindestens eine Längssiegelnaht gebildeten Tubus (1), an dessen Enden Boden (9) und Deckel (7) angebracht sind, von denen der Deckel (7) aus thermoplastischem Kunststoff ohne Trägermaterial besteht, an dem Tubus (1) angespritzt ist und eine Ausgießeinrichtung (8) aufweist, und der Boden (9) viereckig ist und aus dem umgefalteten Tubus (1) der Packung als Faltverschluß ausgebildet ist, wobei ein mit dem Deckel (7) verbundener Griff (11) seitlich am Tubus (1) unterhalb des Deckels (7) derart angebracht ist, daß der Griff (11, 17) zusammen mit dem Deckel (7) innerhalb der quaderförmigen Außenkontur der Packung angeordnet ist, dadurch gekennzeichnet, daß der Tubus (1) aus einer Kunststoffolie gebildet ist, an die zwei einander gegenüberliegende, vom Deckel (7) ausgehend, bis in den Mittelbereich (18) der Packung reichende Greifmulden (11) eingeformt sind, und daß der Querschnitt der Packung in ihrem oberen Abschnitt mit dem Greifmulden (11) im wesentlichen der Form des Deckels (7) entspricht, dessen Umfang im wesentlichen so lang ist wie der Umfang der Packung nahe ihrem Boden (9).

2. Packung nach Anspruch 1, dadurch gekennzeichnet, daß die Greifmulde (11) teilzylindermantelförmig ausgebildet und zwischen dem vorderen Packungskörper unter der Ausgießeinrichtung (8) einerseits und einer hinteren Stützsäule (17) andererseits angeordnet ist.

3. Packung nach Anspruch 1 oder 2, dadurch gekennzeichnet, daß der Deckel (7) im wesentlichen viereckig ist, die Ausgießeinrichtung (8) in einer vorderen Ecke (16) angebracht ist und die Stützsäule (17) sich im wesentlichen unter der hinteren Ecke (16'; 16") des Deckels (7) befindet.

4. Packung nach einem der Ansprüche 1 bis 3, dadurch gekennzeichnet, daß die Ecken (15; 16") des Deckels (7) abgerundet sind.

5. Packung nach einem der Ansprüche 1 bis 4, dadurch gekennzeichnet, daß am oberen Ende (12) wenigstens einer Greifmulde (11) ein Randanschlag (13) einstückig am Rand des Deckels (7) angespritzt ist.

6. Verfahren zur Herstellung einer Packung für fließfähige Füllgüter mit einem Tubus (1), an dessen Enden Boden (9) und Deckel (7) angebracht sind, der Boden (9) viereckig ist und aus dem umgefalteten Tubus (1) der Packung als Faltverschluß ausgebildet ist, wobei ein Griff (11, 17) seitlich am Tubus (1) und unterhalb des Deckels (7) derart angebracht ist, daß der Griff (11, 17) zusammen mit dem Deckel (7) innerhalb der Außenkontur der Packung angeordnet ist, dadurch gekennzeichnet, daß aus einer Kunststoffolie mittels Verschweißen einer Längsnaht ein Tubus (1) geformt und auf einen Dorn mit muldenartigen Vertiefungen gezogen wird, die Seitenwände (2-4) des Tubus (1) in seinem oberen Abschnitt in die Vertiefungen unter Bildung von Greifmulden (11) eingefaltet werden, der Deckel (7) an den oberen Rand (6) der Seitenwände (2-4) angespritzt und gleichzeitig wenigstens die unteren Enden (19) der Greifmulden (11) im Mittelbereich (18) der Packung erwärmt, thermoplastisch verformt und danach gekühlt werden.

7. Verfahren nach Anspruch 6, dadurch gekennzeichnet, daß der Mittelbereich (18) zweier nebeneinanderliegender Seitenwände (3, 4) des Tubus (1), einschließlich der dort befindlichen unteren Enden (19) der Greifmulden (11), erwärmt, thermoplastisch verformt und danach gekühlt wird (Figure 8).

## Fig. 1

# Fig. 2

Fig.3

Fig. 4

Fig. 7

# Fig. 5

# Fig. 6

# Fig. 8

## Fig. 9

## Fig.10

## Fig. 11